# EUROPÄISCHE PATENTSCHRIFT

(11) **EP 1 266 493 B1**
(45) Veröffentlichungstag und Bekanntmachung des Hinweises auf die Patenterteilung: **01.06.2005**
(21) Anmeldenummer: 01919198.0
(22) Anmeldetag: 14.03.2001
(51) Int. Cl.: H04L 12/46

(54) **VERFAHREN UND ANORDNUNG ZUM ÜBERTRAGEN EINES DATENPAKETS VON EINER ERSTEN VERMITTLUNGSEINHEIT AN EINE ZWEITE VERMITTLUNGSEINHEIT IN EINEM DATENNETZ**
METHOD FOR TRANSMITTING A DATA PACKET FROM A FIRST NETWORK UNIT TO A SECOND NETWORK UNIT IN A DATA NETWORK
PROCEDE ET DISPOSITIF PERMETTANT DE TRANSMETTRE UN PAQUET DE DONNEES A PARTIR D'UNE PREMIERE UNITE DE COMMUTATION VERS UNE SECONDE UNITE DE COMMUTATION DANS UN RESEAU DE TRANSMISSION DE DONNEES

(30) Priorität: 21.03.2000 DE 10013809
(43) Veröffentlichungstag der Anmeldung: 18.12.2002
(73) Patentinhaber: SIEMENS AKTIENGESELLSCHAFT, 80333 München (DE)
(72) Erfinder: GRIMMINGER, Jochen, 80638 München (DE); HUTH, Hans-Peter, 80638 München (DE)
(86) Internationale Anmeldenummer: PCT/DE2001/000966
(87) Internationale Veröffentlichungsnummer: WO 2001/071986

(56) Entgegenhaltungen:
- CHEN T M ET AL: "RELIABLE SERVICES IN MPLS" IEEE COMMUNICATIONS MAGAZINE,IEEE SERVICE CENTER. PISCATAWAY, N.J,US, Bd. 37, Nr. 12, Dezember 1999 (1999-12), Seiten 58-62, XP000908325 ISSN: 0163-6804
- ARMITAGE G: "MPLS: THE MAGIC BEHIND THE MYTHS" IEEE COMMUNICATIONS MAGAZINE,IEEE SERVICE CENTER. PISCATAWAY, N.J,US, Bd. 38, Nr. 1, Januar 2000 (2000-01), Seiten 124-131, XP000908346 ISSN: 0163-6804
- MAHMOODIAN A ET AL: "A resource allocation mechanism to provide guaranteed service to mobile multimedia applications" FIRST IEEE/POPOV WORKSHOP ON INTERNET TECHNOLOGIES AND SERVICES. PROCEEDINGS (CAT. NO.99EX391), PROCEEDINGS OF 1ST IEEE-RPS JOINT CONFERENCE ON INTERNET TECHNOLOGIES AND SERVICES, MOSCOW, RUSSIA, 25-28 OCT. 1999, Seiten 9-17, XP002172325 1999, Piscataway, NJ, USA, IEEE, USA ISBN: 0-7803-5985-2

## Beschreibung

Die Erfindung betrifft eine Übertragung eines Datenpakets in einem Datennetz.

Eine solche Übertragung eines Datenpakets in einem Datennetz ist aus [1] bekannt.

Im allgemeinen wird in einem Datennetz eine Information, welche von einem Informationsanbieter in dem Datennetz zur Verfügung gestellt wird, von dem Informationsanbieter an einen Nutzer übertragen.

In einem paketorientierten Datennetz, zum Beispiel einem IP-Datennetz, wird die Information in Form eines Datenpaket übertragen. Anschaulich gesehen wird die Information als Paket, in diesem Fall als das Datenpaket, "verpackt" und mit dem Datenpaket übertragen.

In der Regel wird ein solches Datenpaket mit einem sogenannten Label oder Header, vergleichbar einer Adresse, versehen, welches oder welcher zumindest eine Zieladresse für die Übertragung des Datenpakets angibt.

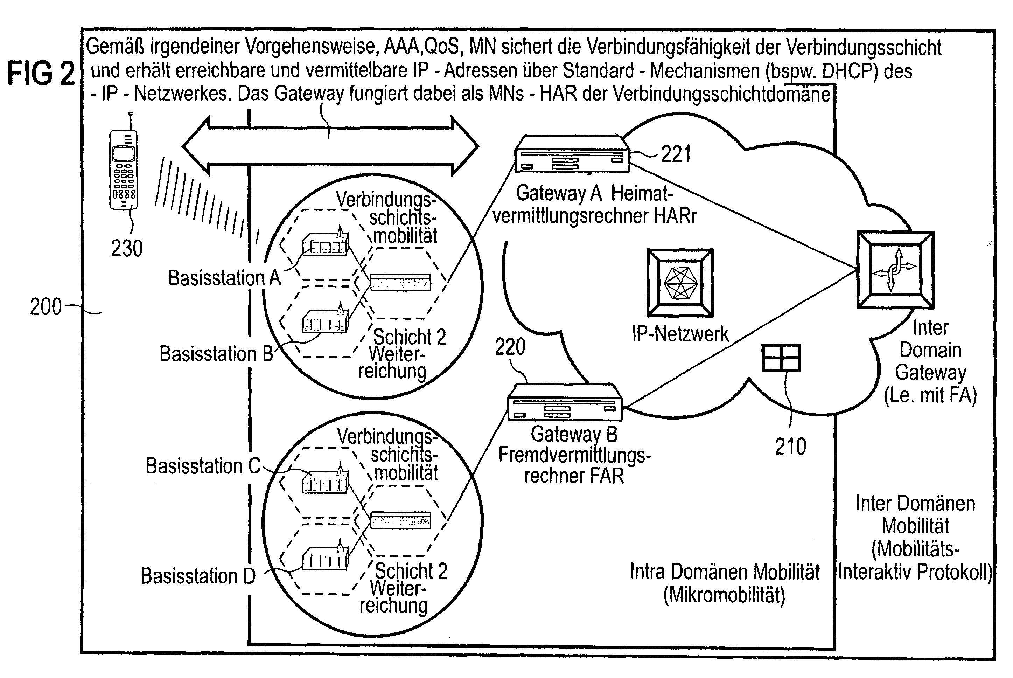

In **Fig.2** ist ein solches IP-Datennetz 200 sowie eine Übertragung eines Datenpaket 210 schematisch dargestellt.

Eine Organisation eines solche IP-Datennetzes 200 ist ebenfalls aus [1] oder [3] bekannt.

Ein Datenpaket 210 ist ferner in [1] oder [3] beschrieben.

Um zu gewährleisten, dass ein Datenpaket auch an denjenigen Nutzer im Datennetz übertragen wird, für den es bestimmt ist, muss der Nutzer einen Vermittlungsdienst, welcher von einer Vermittlungseinheit, einem sogenannten Gateway oder "Router", angeboten wird, in Anspruch nehmen.

Ein solcher "Router" 220 bzw. 221 ist ebenfalls in **Fig.2** dargestellt und aus [2] bekannt.

Ein Vermittlungsdienst vermittelt in der Regel ein Datenpaket in dem Datennetz und stellt damit sicher, dass das Datenpaket auch zu dem Nutzer, welcher es angefordert hat, übertragen wird.

Ein Nutzer kann einen Vermittlungsdienst von unterschiedlichen Vermittlungseinheiten in einem Datennetz in Anspruch nehmen.

Alle Datenpakete, welche an den Nutzer übertragen werden sollen, werden an eine Vermittlungseinheit übertragen, welche diese dann an den Nutzer weiter überträgt.

Befindet sich ein Nutzer, beispielsweise ein Mobiltelefon 230 (vgl. **Fig.2**), noch nicht in dem Datennetz, in diesem Fall ein Mobilfunknetz 200, zu dem er Zugang erhalten will, so muss er zuerst eine Verbindung zu einer Vermittlungseinheit, dem "Router" 221 bzw. 220, in dem Datennetz aufbauen.

Dies geschieht dadurch, dass sich das Mobiltelefon 230 in das Mobilfunknetz 200 einwählt bzw. anmeldet und damit mit einer Vermittlungseinheit 221, in dessen Einflussbereich sich das Mobiltelefon 230 aktuell befindet ("Home Access Router" 221), verbunden wird.

Die Vermittlungseinheit, bei der sich das Mobiltelefon ursprünglich einwählt bzw. anmeldet, wird als sogenannte "Home Access Router" 221 bezeichnet.

Dieses Einwählen bzw. Anmelden wird beispielsweise gemäß einem Point to Point Protokoll oder einem Dynamic Host Configuration Protokoll, welche in [4] oder [5] beschrieben sind, durchgeführt.

Im Rahmen des Einwählens bzw. Anmeldens eines Mobiltelefons in ein Mobilfunknetz werden sogenannte Verbindungsparameter, beispielsweise eine Übertragungsqualität oder ein Sicherheitsmechanismus, zwischen dem Mobiltelefon und der zuständigen Vermittlungseinheit vereinbart bzw. festgelegt.

Solche Verbindungsparameter sind in [4] oder [5] beschrieben.

Darüber hinaus wird bei dem Anmelden dem Mobiltelefon eine feste Adresse, eine sogenannte IP-Adresse zugeordnet.

Diese Adresse ist solange gültig, solange das Mobiltelefon 230 bei der zuständigen Vermittlungseinheit, dem "Home Access Router" 221, angemeldet ist.

Will bzw. muss ein Mobiltelefon eine Vermittlungseinheit wechseln, beispielsweise weil das Mobiltelefon seine örtliche Position verändert und dabei von einem Einflussbereich einer ursprünglichen ersten Vermittlungseinheit ("Home Access Router" 221) in den Einflussbereich einer neuen zweiten Vermittlungseinheit wechselt ("Foreign Access Router" 220), so muss die aufgebaute Verbindung des Mobiltelefons mit der ursprünglichen ersten Vermittlungseinheit 221 beendet und eine neue Verbindung mit der neuen zweiten Vermittlungseinheit 220 aufgebaut werden.

Bei dem Aufbau der neuen Verbindung wird das Mobiltelefon bei der neuen Vermittlungseinheit wieder neu angemeldet. Die Verbindungsparameter und die IP-Adresse müssen neu festgelegt bzw. vereinbart werden. Nur dann ist gewährleistet, dass ein Datenpaket korrekt an das Mobiltelefon übertragen wird.

Alle während der ursprünglichen Verbindung festgelegten Verbindungsparameter gehen verloren.

Aus Chen T. M. et al.: "Reliable services in MPLS", IEEE Communications Magazine, IEEE Sevice Center. Piscataway, N. J., US, Bd. 37, Nr. 12, Dezember 1999 (1999-12), Seiten 58-62, ist ein "Multiprotocol label switching" (MPLS) bekannt, welches zur Beschleunigung einer Datenübertragung bzw. - weiterleitung in einem Datennetz eingesetzt wird.

Aus Armitage G: "MPLS: The Magic Behind the Myths", IEEE Communications Magazine, IEEE Service Center. Piscataway, N. J, US, Bd. 38, Nr. 1, Januar 2000 (2000-01), ist eine Datenübertragung zwischen einer mobilen Einheit und einem IP-Kommunikationsnetz bekannt, welches das Problem einer "real-time" Datenübertragung zwischen der mobilen Einheit und dem IP-Kommunikationsnetz durch ein sog. "Mobile RSVP protocol" löst, das eine Änderung von Datenstrukturen, beispielsweise Änderungen von einem Datenprotokoll beinhaltet.

Ein weiteres MPLS System, welches RSVP nutzt, ist aus Mahmoodian A. et al.: "A Ressource Allocation Mechanism to Provide Guaranteed Service to Mobile Multimedia Applications", First IEEE/POPOV Workshop On Internet Technologies and Services. Proceedings (CAT. NO.99EX391), Proceedings of 1^{st} IEEE.RPS Joint Conference on Internet Technologies and Services, Moscow, Russia, 25-28 Oct. 1999, Seiten 9-17, bekannt.

Der Erfindung liegt das Problem zugrunde, ein Verfahren und eine Anordnung anzugeben, mit welchen eine Übertragung von einem Datenpaket in einem Datennetz an einen Nutzer, welcher von einer ersten Vermittlungseinheit zu einer zweiten Vermittlungseinheit in dem Datennetz wechselt, verbessert wird.

Das Problem wird durch das Verfahren und durch die Anordnung gemäß dem jeweiligen unabhängigen Patentanspruch gelöst.

Bei einem Verfahren zum Übertragen eines Datenpakets von einer ersten Vermittlungseinheit an eine zweite Vermittlungseinheit in einem Datennetz wird an die erste Vermittlungseinheit übertragen. Unter Verwendung der ersten Verbindungsinformation wird eine Verbindung zwischen der ersten Vermittlungseinheit und der zweiten Vermittlungseinheit eingerichtet. Dem Datenpaket wird von der ersten Vermittlungseinheit eine zweite Verbindungsinformation zugeordnet. Anschließend wird das Datenpaket unter Verwendung der zweiten Verbindungsinformation von der ersten Vermittlungseinheit an die zweite Vermittlungseinheit übertragen.

Eine Anordnung zum Übertragen eines Datenpakets in einem Datennetz, weist eine erste Vermittlungseinheit, eine zweite Vermittlungseinheit und eine Verbindung zwischen der ersten Vermittlungseinheit und der zweiten Vermittlungseinheit auf, welche Verbindung unter Verwendung einer ersten Verbindungsinformation einrichtbar ist, welche erste Verbindungsinformation an die erste Vermittlungseinheit übertragen wurde.
Die erste Verbindungseinheit ist derart eingerichtet, dass dem Datenpaket eine zweite Verbindungsinformation zuordnbar ist. Ferner sind die erste Vermittlungseinheit und die zweite Vermittlungseinheit derart eingerichtet, dass das Datenpaket unter Verwendung der zweiten Verbindungsinformation von der ersten Vermittlungseinheit an die zweite Vermittlungseinheit übertragbar in dem Datennetz ist.

Die Anordnung ist insbesondere geeignet zur Durchführung des erfindungsgemäßen Verfahrens oder einer dessen nachfolgend erläuterten Weiterbildungen.

Der besondere Vorteil der Erfindung liegt darin, dass bestimmte bestehende Verbindungsparameter beibehalten werden können. Bestimmte Verbindungen in dem Datennetz können deshalb aufrechterhalten werden auch bei einem Wechsel der Vermittlungseinheit.

Es ist darauf hinzuweisen, dass unter einer Verbindung sowohl eine physikalische als auch eine virtuelle Verbindung zu verstanden werden kann.

Bevorzugte Weiterbildungen der Erfindung ergeben sich aus den abhängigen Ansprüchen.

Die im weiteren beschriebenen Weiterbildungen beziehen sich sowohl auf das Verfahren als auch auf die Anordnung.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem ein Computerprogramm gespeichert ist, welches die Erfindung oder Weiterbildung ausführt.

Auch können die Erfindung und/oder jede im weiteren beschriebene Weiterbildung durch ein Computerprogrammerzeugnis realisiert sein, welches ein Speichermedium aufweist, auf welchem ein Computerprogramm gespeichert ist, welches die Erfindung und/oder Weiterbildung ausführt.

Die Verbindung zwischen der ersten und der zweiten Vermittlungseinheit kann eingerichtet werden dann, wenn die erste Verbindungsinformation mindestens eine der folgenden Informationen umfasst:
- eine Datennetzmanagementinformation,
- eine Sicherheitsinformation,
- eine Qualitätsinformation,
- eine Kosteninformation,
- eine Benutzerinformation,
- eine Zielinformation.

Es ist aber darauf hinzuweisen, dass obige Auflistung von Informationen nicht abschließend zu verstehen ist, sondern dass die erste Verbindungsinformatiön weitere Informationen umfassen kann.

Für eine sichere Übertragung des Datenpakets an eine Zieleinheit, beispielsweise ein Kommunikationsendgerät, ist die zweite Verbindungsinformation bevorzugt eine Adresse.

Eine solche Adresse kann eine Multi-Protocol-Label-Switching-Adresse (MPLS-Label) sein.

Zu einer näheren Bestimmung einer Übertragungseigenschaft in dem Datennetz kann die Adresse bevorzugt mit mindestens eine der folgenden Informationen verknüpft werden:
- eine Datennetzmanagementinformation,
- eine Sicherheitsinformation,
- eine Qualitätsinformation,
- eine Kosteninformation,
- eine Benutzeridentifikationsinformation,
- eine Zielinformation,
- eine Tunnelinformation,
- eine Datenübertragungsinformation.

Es ist aber darauf hinzuweisen, dass obige Auflistung von Informationen nicht abschließend zu verstehen ist, sondern dass die Adresse mit weiteren Informationen verknüpft werden kann.

Die Informationen können auch codiert werden und als Code in der Adresse enthalten sein oder in einer Liste gespeichert werden.

Die zweite Verbindungsinformation kann nur temporär dem Datenpaket zugeordnet werden. So ist es zweckmäßig, dem Datenpaket in der ersten Vermittlungseinheit die zweite Verbindungsinformation zuzuordnen ("labeling"). In der zweiten Vermittlungseinheit wird die zweite Verbindungsinformation wieder von dem Datenpaket getrennt ("delabeling").

Unter dem Einrichten der Verbindung kann verstanden werden, dass die Verbindung unter Verwendung der ersten Verbindungsinformation neu eingerichtet oder auch eine bereits eingerichtete Verbindung unter Verwendung der ersten Verbindungsinformation neu konfiguriert wird.

In einer Ausgestaltung umfasst die Verbindung mehrere Teilverbindungen. In diesem Fall führt die Verbindung von der ersten Vermittlungseinheit zu der zweiten Vermittlungseinheit über Zwischenvermittlungseinheiten. Auch ist es denkbar, dass diese Teilverbindungen in paralleler Weise die erste und die zweite Vermittlungseinheit verbinden. Auch eine Kombination der beiden Fälle, parallel oder in Reihe, ist denkbar.

Die erste und die zweite Vermittlungseinheit wie auch die Zwischenvermittlungseinheiten können sogenannte Router, Switches oder Gateways sein.

In einer Weiterbildung ist die Verbindung und/oder die Teilverbindung ein Tunnel. Ein solches Tunnel kann insbesondere ein Multi-Protocol-Label-Switching Label-Switched-Path Tunnel (MPLS LSP Tunnel) sein.

In einer Ausgestaltung ist das Datennetz ein IP-Kommunikationsnetz.

In einem IP-Kommunikationsnetz wird das Datenpaket in der Regel von einer Datenquelle über eine oder mehrere Vermittlungseinheiten, welche das Paket jeweils weiterleiten, an ein Kommunikationsendgerät, beispielsweise ein Mobiltelefon, übertragen. Dabei ist das Kommunikationsendgerät bei einer dem Kommunikationsendgerät zugeordneten Vermittlungseinheit, einem sogenannten Home Access Router, angemeldet. In der Regel ist das Kommunikationsendgerät auch mit diesem Home Access Router verbunden.

Wird das Kommunikationsendgerät aber mit einer "fremden" Vermittlungseinheit verbunden, bei der das Kommunikationsendgerät nicht angemeldet ist, einem sogenannten Foreign Access Router, und wird das Kommunikationsendgerät bei diesem Foreign Access Router nicht neu angemeldet, so kann das Datenpaket von der Datenquelle an das Kommunikationsendgerät in der Regel nicht sicher übertragen werden.

In einem solchen Fall ist es günstig eine Weiterbildung der Erfindung für die Übertragung des Datenpakets einzusetzen, da damit die Sicherheit bei der Übertragung erhöht wird.

Dabei ist es möglich, dass die erste Verbindungsinformation von der zweiten Vermittlungseinheit oder dem Kommunikationsendgerät oder einer dritten Einheit in dem Datennetz an die erste Vermittlungseinheit übertragen wird.

Bei dieser Weiterbildung wird das Datenpaket von der Datenquelle an die erste Vermittlungseinheit, weiter über die Verbindung zu der zweiten Vermittlungseinheit und anschließend an das Kommunikationsendgerät übertragen.

Der Übertragungsweg kann auch in umgekehrter Weise realisiert sein.

Ein Ausführungsbeispiel der Erfindung ist in Figuren dargestellt und wird im weiteren näher erläutert.

Es zeigen
- Figur 1: eine Skizze eines IP-Datennetzes gemäß einem Ausführungsbeispiel;
- Figur 2: eine Skizze eines IP-Datennetzes;
- Figur 3: eine Skizze mit einem Verfahrensablauf bei einer Übertragung eines Datenpakets in einem IP-Datennetz gemäß einem Ausführungsbeispiel;
- Figur 4: eine Skizze eines IP-Datennetzes, bei welchem eine Mobilität einer mobilen Einheit zwischen vielen Vermittlungseinheiten dargestellt ist.

### Ausführungsbeispiel: Datenübertragung in einem IP-Datennetz

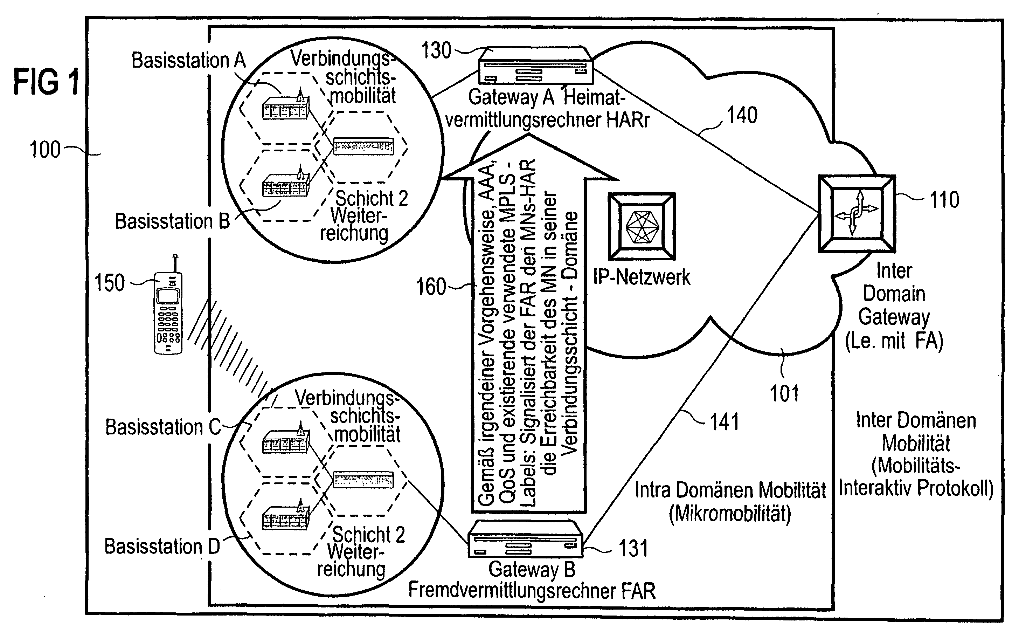

**Fig.1** zeigt einen Aufbau eines IP-Datennetzes 100 mit zugehörigen Komponenten zur Übertragung eines Datenpakets 101 in dem IP-Datennetz 100.

Der Aufbau gemäß **Fig.1** zeigt nicht eine Minimal-Konfiguration des IP-Datennetzes 100. Verschiedene Komponenten sind nur für eine Erhöhung der Benutzerfreundlichkeit vorgesehen. Für eine Funktionsweise des IP-Datennetzes 100 sind sie jedoch nicht erforderlich.

Dieses IP-Datennetz 100 ist gemäß einem Layermodell, welches in [6] beschrieben ist, organisiert bzw. aufgebaut.

Die nachfolgend beschriebenen Komponenten des IP-Datennetzes 100 gemäß **Fig.1** sind zum Grossteil Standard-Komponenten eines IP-Datennetzes, welche einem Fachmann allgemein bekannt sind.

**Fig.1** zeigt das IP-Datennetz 100, welches eine Datenquelle 110, beispielsweise eine Datenbank, einen ersten 130 und einen zweiten 131 Router, ein Gateway A 130 und ein Gateway B 131, umfasst.

Mit Datenleitungen 140, 141, über das Datenpaket 101 in dem IP-Datennetz 100 übertragen werden kann, sind die Router 130, 131 jeweils mit der Datenquelle 110 verbunden.

**Fig.1** zeigt ein mobiles Kommunikationsendgerät 150, ein Mobiltelefon 150.

Das Mobiltelefon 150 ist bei dem ersten Router 130 angemeldet. Der erste Access Router 130 wird in diesem Fall als sogenannter Home Access Router 130 bezeichnet.

Bei der Anmeldung des Mobiltelefons 150 bei dem Home Access Router 130 wird dem Mobiltelefon 150 von dem Home Access Router 130 eine sogenannte IP-Nummer zugeordnet.

Die für diesen Zweck vergebenen IP-Nummern sind IP-Datennetz 100 eindeutig "routbar" sein [2].

Diese IP-Nummer dient dazu, das Mobiltelefon auf Layer 3 für das IP-Datennetz 100 erreichbar zu machen.

Ferner ist in **Fig.1** dargestellt, dass das Mobiltelefon 150 einen Einflussbereich des Home Access Routers 130 verlassen hat und sich nun in dem Einflussbereich des zweiten Access Routers 131, einem sogenannten Foreign Acess Router 131, befindet.

Zwischen dem Mobiltelefon 150 und dem Foreign Access Router 131 werden Datenpakete gemäß dem Layermodell, welcher in [6] beschrieben ist, übertragen.

Ferner ist in **Fig.1** ein sogenannter Multi-Protocol-Label-Switching Label-Switched-Path Tunnel (MPLS LSP Tunnel) 160, welches den Home Access Router 130 mit dem Foreign Access Router 131 verbindet, dargestellt.

Grundzüge eines MPLS LPS Tunnel sind aus [7] bekannt.

Zum Aufbau dieses MPLS LPS Tunnels 160 zwischen dem Foreign Access Router 131 und dem Home Access Router 130 werden von dem Foreign Access Router 131 Verbindungsinformationen an den Home Acccess Router übertragen.

Durch die Verbindungsinformationen wird eine Konfiguration des einzurichtenden MPLS LPS Tunnels 160 festgelegt.

Es wird festgelegt:
- welchen Übertragungsweg ein Datenpaket 101 zwischen dem Home Access Router 130 und dem Foreign Access Router 131 zurücklegen muss,
- welche Sicherheitsstandards bei einer Übertragung zwischen dem Home Access Router 130 und dem Foreign Access Router 131 in dem MPLS LPS Tunnel 160 eingehalten werden sollen,
- welche Qualitätsstandards bei einer Übertragung zwischen dem Home Access Router 130 und dem Foreign Access Router 131 in dem MPLS LPS Tunnel 160 eingehalten werden sollen (Quality of Service),
- mit welchem Label ein zwischen dem Home Access Router 130 und dem Foreign Access Router 131 in dem MPLS LPS Tunnel 160 übertragenes Datenpaket 101 gekennzeichnet werden soll,
- mit welcher Geschwindigkeit ein Datenpaket 101 zwischen dem Home Access Router 130 und dem Foreign Access Router 131 in dem MPLS LPS Tunnel 160 übertragen werden soll,
- welche Kosten bei einer Übertragung eines Datenpakets zwischen dem Home Access Router 130 und dem Foreign Access Router 131 in dem MPLS LPS Tunnel 160 verrechnet werden sollen.

Ferner können weitere Verbindungsinformationen, beispielsweise Informationen über das Mobiltelefon 150 und/oder über die Datenquelle 110, welche auch zu einer Konfiguration des MPLS LPS Tunnel 160 verwendet werden können, von dem Foreign Access Router 131 an den Home Acccess Router 130 übertragen werden.

Es ist anzumerken, dass diese Informationen nicht zwingend von dem Foreign Access Router 131 an den Home Access Router übertragen werden müssen, sondern auch von einer dritten Instanz, beispielsweise dem Mobiltelefon 150, übertragen werden können.

Darüber hinaus ist darauf hinzuweisen, dass die beschriebenen Verbindungsinformationen nicht abschließend zu verstehen sind.

Durch die Verbindungsinformationen wird dem Home Access Router 130 auch angezeigt, dass sich das Mobiltelefon 150 in dem Einflussbereich des Foreign Access Routers 131 befindet.

Damit müssen Datenpakete, welche zwischen dem IP-Datennetz 100 und dem Mobiltelefon 150 übertragen werden, an den Foreign Access Router 131 übertragen und von diesem an das Mobiltelefon 150 weiter vermittelt werden.

Entsprechend der festgelegten Konfiguration wird der MPLS LSP Tunnel eingerichtet.

Nachfolgend wird eine Übertragung eines Datenpakets 101 zwischen der Datenquelle 110 und dem Mobiltelefons 150 beschrieben.

### a) Übertragung eines Datenpakets 101 von dem Mobiltelefon 150 zu der Datenquelle 110

Fordert das Mobiltelefon 150 eine Information bei der Datenquelle 110 an, so wird ein entsprechendes Anforderungsdatenpaket von dem Mobiltelefon 150 an die Datenquelle 110 übertragen.

Dazu wird das Anforderungsdatenpaket in dem Mobiltelefon mit einer Zieladresse, welche die Datenquelle 110 als Übertragungsziel festlegt, versehen bzw. adressiert.

Das adressierte Datenpaket wird von dem Mobiltelefon 150 an den Foreign Access Router 131 gemäß dem Layermodell übertragen. In dem Foreign Access Router 131 wird das adressierte Datenpaket analysiert und weiter vermittelt bzw. weiter übertragen.

Bei der Weiterübertragung des adressierten Datenpakets an die Datenquelle 110 muss das adressierte Datenpaket gegebenenfalls von weiteren Routern weiter vermittelt werden.

Nur zur Vereinfachung ist in **Fig.1** eine direkte Verbindung, die Datenleitung 141, über welche das adressierte Datenpaket an die Datenquelle 110 übertragen wird, dargestellt.

Am Ende der Übertragung gelangt das Anforderungsdatenpaket zu der Datenquelle 110. Dort wird es analysiert. Die Anforderung wird bearbeitet.

### b) Übertragung eines Datenpakets 101 von der Datenquelle zu dem Mobiltelefon 150

Die Datenquelle 110 stellt ein Antwortdatenpaket, welches an das Mobiltelefon 150 zurückgeschickt wird, zusammen.

Das Antwortdatenpaket wird mit der IP-Nummer als Zieladresse, welche das Mobiltelefon 150 als Übertragungsziel festlegt, versehen bzw. adressiert.

Das adressierte Antwortdatenpaket von der Datenquelle 110 zuerst an den Home Access Router 130 übertragen.

Nur zur Vereinfachung ist in **Fig.1** eine direkte Verbindung, die Datenleitung 140, über welche das Antwortdatenpaket an den Home Access Router 130 tragen wird, dargestellt.

Eine Übertragung über mehrere verschiedene Router wäre möglich.

Dem Home Access Router 130 wurde bei dem Aufbau des MPLS LSP Tunnel mitgeteilt, dass sich das Mobiltelefon 150 aktuell in dem Einflussbereich des Foreign Access Routers 131 befindet.

Somit "weiß" der Home Access Router 130, das er das Antwortdatenpaket, welches für das Mobiltelefon 150 bestimmt ist, an den Foreign Access Router 131 weiter vermitteln bzw. weiter übertragen muss.

Für die Übertragung das Antwotdatenpakets zwischen dem Home Access Router 130 und dem Foreign Access Router 130 versieht der Home Access Router 130 das Antwortdatenpaket mit einem sogenannten MPLS LSP Label.

Ein solches MPLS LSP Label ist in [7] beschrieben.

Anschaulich gesehen wird das Antwortdatenpaket vorübergehend, d.h. nur für die Übertragung zwischen dem Home Access Router 130 und dem Foreign Access Router 131, neu an den Foreign Access Router 131 adressiert. Die ursprüngliche Zieladresse, die IP-Nummmer des Mobiltelefons, bleibt erhalten, wird aber vorübergehend durch das MPLS LSP Label überdeckt.

Dieses MPLS LSP Label wird folgenden Informationen verknüpft:
- eine Datennetzmanagementinformation,
- eine Sicherheitsinformation,
- eine Qualitätsinformation,
- eine Kosteninformation,
- eine Benutzeridentifikationsinformation,
- eine Zielinformation,
- eine Tunnelinformation,
- eine Datenübertragungsinformation.

Es ist darauf hinzuweisen, dass die beschriebenen Informationen, welche mit dem MPLS LSP Label verknüpft werden, nicht abschließend zu verstehen sind. Weitere Verknüpfungen sind möglich.

Die Informationen werden als Zahlencode codiert.

Das mit dem Zahlencode bzw. MPLS LSP Label "adressierte" Antwortdatenpaket wird durch den MPLS LSP Tunnel 160 von dem Home Access Router 130 an den Foreign Access Router 131 übertragen.

In dem Foreign Access Router 131 wird das MPLS LSP Label wieder von dem Antwortdatenpaket getrennt. Das Antwortdatenpaket weist wieder die ursprüngliche Zieladresse, die IP-Nummer des Mobiltelefons 150, auf.

Gemäß dem Layermodell wird das Antwortdatenpaket von dem Foreign Access Router 131 an das Mobiltelefon 150 übertragen.

Am Ende der Übertragung gelangt das Antwortdatenpaket zu dem Mobiltelefon 150. Dort wird es analysiert und "entpackt", wobei eine Nutzinformation für das Mobiltelefon 150 verfügbar wird.

Es ist anzumerken, dass oben beschriebene Übertragungen basierend auf bekannte Übertragungs-Standards durchgeführt werden. Entsprechende bekannte Datenprotokolle werden verwendet.

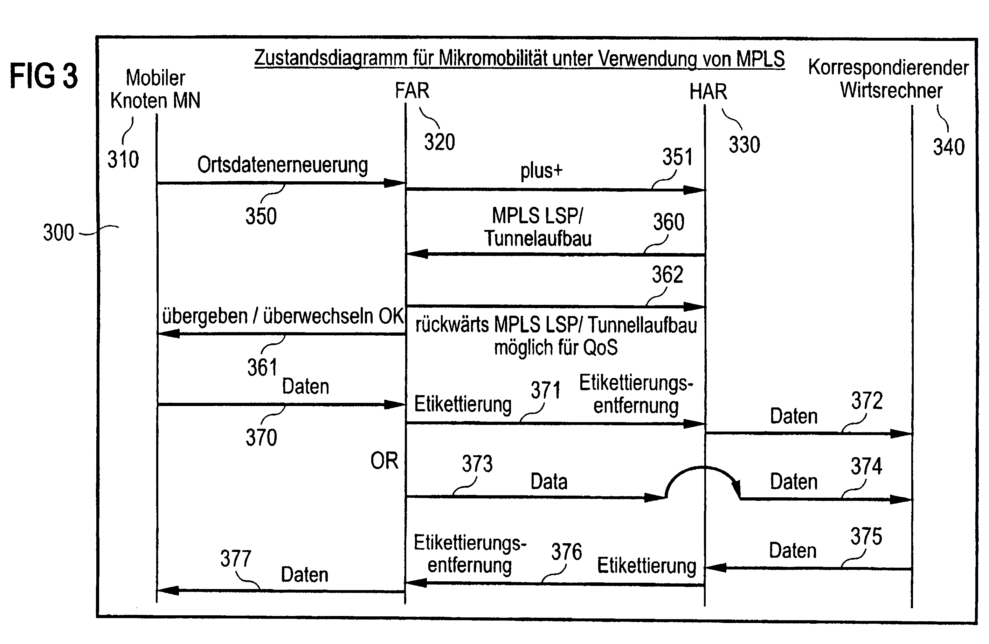

In **Fig.3** ist ein Ablaufdiagramm mit einem Verfahrensablauf 300 dargestellt, welches ein Zusammenspiel einzelner Komponenten eines IP-Datennetzes bei einer Übertragung eines Datenpakets schematisch beschreibt.

Das IP-Datennetz umfasst eine mobile Einheit 310, in **Fig.3** bezeichnet als "Mobile Node MN", einen Foreign Access Router 320, einen Home Access Router 330 und einen sogenannten "Correspondent Host" (Datenquele) 340.

Der Mobile Node 310 ist bei dem Home Access Router 330 angemeldet, befindet sich aber in einem Einflussbereich des Foreign Access Routers 320.

In diesem Fall teilt der Mobile Node 310 dem Foreign Access Router 320 mit, dass er sich in seinem Einflussbereich befindet und dementsprechend einen Vermittlungsdienst des Foreign Access Routers 320 bei einer Übertragung eines Datenpakets in Anspruch nehmen muss ("Location Update, 350).

Der Foreign Access Router 320 teilt nun seinerseits dem Home Access Router 310 mit, dass sich der Mobile Node 310 in seinem Einflussbereich befindet und dementsprechend ein Datenpaket, welches für den Mobile Node 310 bestimmt ist und an den Home Access Router 330 übertragen wurde, an den Foreign Access Router weiter zu leiten ist (Location Update plus +, 351).

Ferner übermittelt der Foreign Access Router 320 Verbindungsinformationen an den Home Access Router 330, unter Verwendung derer ein MPLS LSP Tunnel zwischen dem Foreign Access Router 320 und dem Home Access Router 330 aufgebaut werden kann (Location Update plus +, 351).

In weiteren Schritten 360 und 362 wird entsprechend der Verbindungsinformationen das MPLS LSP Tunnel aufgebaut (MPLS LSP Tunnel Establishment, 360 und backward MPLS LSP Tunnel Establishment, 362).

Der Foreign Access Router 320 teilt dem Mobile Node 310 mit, dass eine Verbindung zwischen dem Mobile Node 310 und dem IP-Datennetz eingerichtet worden ist (Hand Over/Change Over OK, 361) .

Bei einer Übertragung eines Datenpakets von dem Mobile Node 310 zu dem Correspondent Host 340 wird das Datenpaket in einem Schritt 370 von dem Mobile Node 310 an den Foreign Access Router 320 übertragen.

Von dem Foreign Access Router 320 wird das Datenpaket weiter vermittelt und an den Correspondent Host 340 übertragen (Schritt 373 und Schritt 374 bzw. Schritt 371 und Schritt 372).

Diese Übertragung kann über zwei verschiedene Übertragungswege erfolgen:
a) Das Datenpaket erhält von dem Foreign Access Rpouter 320 ein Label, welches den Home Access Router 330 als Zieladresse ausweist. Anschließend wird das Datenpaket über den MPLS LSP Tunnel an den Home Access Router 330 übertragen. Bei dem Home Access Router 330 wird das Label wieder von dem Datenpaket entfernt (Schritt 371).
   Von dem Home Access Router 330 wird das Datenpaket weiter an den Correspondent Host 340 übertragen (Schritt 372).
b) Das Datenpaket wird von dem Foreign Access Router 320 direkt (ohne über den Home Access Router 330) an den Correspondent Host 340 übertragen (Schritt 373 und Schritt 374).

Ein Datenpaket, welches von dem Correspondent Host 340 wieder zurück an den Mobile Node 310 übertragen wird, wird in einem Schritt 375 von dem Correspondent Host 340 an den Home Access Router 330 übertragen (Schritt 375).

Bei dem Home Access Router 330 erhält das Datenpaket ein Label (Schritt 376), welches den Foreign Access Router 320 als Zieladresse ausweist.

Das Label umfasst weitere Informationen, sogenannte Verbindungsinformationen, welche für die Übertragung über das MPLS LSP Tunnel verwendet werden.

Anschließend wird das "gelabelte" Datenpaket von dem Home Access Router 330 über das MPLS LSP Tunel an den Foreign Access Router 320 übertragen (Schritt 376).

Bei dem Foreign Access Router 320 wird das Label wieder von dem Datenpaket getrennt (Schritt 376).

In einem weiteren Schritt 377 wird das Datenpaket von dem Foreign Access Router 320 an den Mobile Node 310 übertragen (Schritt 377).

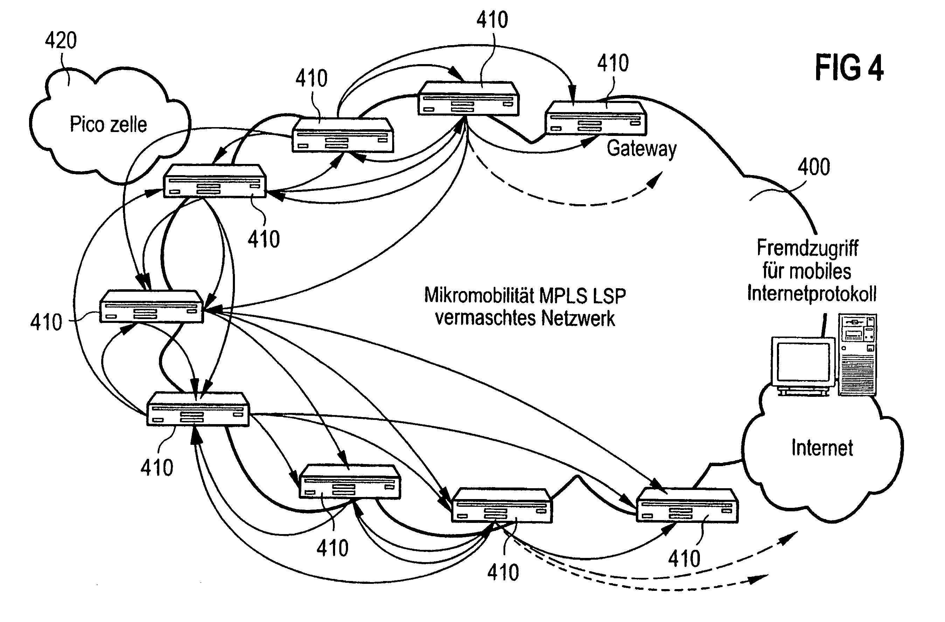

**Fig.4** zeigt schematisch eine Mobilität einer mobilen Einheit 420 zwischen einer Vielzahl von Routern 410 in einem IP-Datennetz 400.

Das in **Fig.4** dargestellte IP-Datennetz 400 weist die gleiche Funktionalität wie das IP-Datennetz gemäß dem Ausführungsbeispiel auf, welches in **Fig.1** dargestellt ist.

Auch zwischen den in **Fig.4** dargestellten Routern 410 können gegebenenfalls im vorherigen beschriebene MPLS-LSP-Tunnel aufgebaut werden.

**Fig.4** zeigt eine Vielzahl von Routern 410 in dem IP-Datennetz 400. Ferner ist eine mobile Einheit, in diesem Fall ein mobiler "Host" 420, dargestellt.

Durch Pfeile **430** wird eine Mobilität des mobilen Host 420 verdeutlicht. Der mobile Host 420 verändert entsprechend den Pfeilen 430 seine Position und gelangt dadurch in Einflussbereiche unterschiedlicher Routers 410.

Um eine sichere Datenübertragung zwischen einer Datenquelle und dem mobilen Host 420 zu gewährleisten, ohne dass sich der Host bei jedem neuen Access Router 410 anmelden, bei dem alten Access Router 410 abmelden und jedes Mal neue Übertragungsparameter festlegen muss, wird jeweils zwischen dem (festen) Home Access Router und dem aktuellen Foreign Access Router ein MPLS LSP Tunnel gemäß den vorherigen Ausführungen eingerichtet oder verwendet.

Über diese Tunnel werden Daten, welche zwischen dem mobilen Host 420 und der Datenquelle ausgetauscht werden, übertragen.

Anschaulich gesehen werden die Access Router 410 durch die MPSL LSP Tunnel vernetzt. Der mobile Host 420 kann dann bei beliebigen Wechseln zwischen verschiedenen Router 410 von einem Router 410 an einen anderen Router 410 "übergeben" werden.

Im Rahmen dieses Dokuments sind folgende Veröffentlichungen zitiert:
[1] W. Richard Stevens; TCP/IP Illustrated, Volume 1, Chapter 3, S. 33 - 53, Edison Wesley, 1994, Reading, USA;
[2] W. Richard Stevens; TCP/IP Illustrated, Volume 1, Chapter 9, S. 111 - 126, Edison Wesley, 1994, Reading, USA;
[3] www.IETF.org/rfc/rfc0791.txt, Request For Comment (RFC) 791, Standard IETF, 1981, verfügbar am 21.03.2000;
[4] www.IETF.org/rfc/rfc1548.txt, (PtP), Request For Comment (RFC) 791, Standard IETF, 1981, verfügbar am 21.03.2000;
[5] www.IETF.org/rfc/rfc2131.txt, (DHCP), Request For Comment (RFC) 791, Standard IETF, 1981, verfügbar am 21.03.2000;
[6] W. Richard Stevens; TCP/IP Illustrated, Volume 1, Chapter 1, S. 1 - 21, Edison Wesley, 1994, Reading, USA;
[7] www.IETF.org/internet-drafts/draft-IETF-MPLS-framework-05.txt, verfügbar am 21.03.2000.

## Patentansprüche

1. Verfahren zum Übertragen eines Datenpakets von einer ersten Vermittlungseinheit über eine zweite Vermittlungseinheit an ein Kommunikationsendgerät in einem Datennetz,
- bei dem das Kommunikationsendgerät in einen Kommunikationsbereich der zweiten Vermittlüngseinheit eintritt,
- bei dem durch diesen Eintritt eine Übertragung einer ersten Verbindungsinformation an die erste Vermittlurigseinheit veranlasst wird,
- bei dem unter Verwendung der ersten Verbindungsinformation eine Verbindung zwischen der ersten Vermittlungseinheit und der zweiten Vermittlungseinheit eingerichtet wird,
- bei dem dem Datenpaket von der ersten Vermittlungseinheit eine zweite Verbindungsinformation zugeordnet wird,
- bei dem das Datenpaket unter Verwendung der zweiten Verbindungsinformation von der ersten Vermittlungseinheit über die zweite Vermittlungseinheit an das Kommunikationsendgerät übertragen wird.

2. Verfahren nach Anspruch 1,
bei dem bei dem Eintritt des Kommunikationsendgerätes in den Kommunikationsbereich der zweiten Vermittlungseinheit das Kommunikationsandgerät bei der zweiten Vermittlungseinheit angemeldet wird.

3. Verfahren nach Anspruch 1 oder 2,
bei dem die erste Verbindungsinformation von der zweiten Vermittlungseinheit an die erste Vermittlungseinheit übertragen wird.

4. Verfahren nach Anspruch 1 oder 2,
bei dem die erste Verbindungsinformation von dem Kommunikationsendgerät oder einer dritten Einheit in dem Datennetz an die erste Vermittlungseinheit übertragen wird.

5. Verfahren nach einem der vorangehenden Ansprüche,
bei dem das Kommunikationsendgerät von einem Kommunikationsbereich der ersten Vermittlungseinheit in den Kommunikationsbereich der zweiten Vermittlungseinheit eintritt.

6. Verfahren nach einem der vorangehenden Ansprüche,
bei dem die erste Verbindungsinformation mindestens eine der folgenden Informationen umfasst:
- eine Datennetzmanagementinformation,
- eine Sicherheitsinformation,
- eine Qualitätsinformation,
- eine Kosteninformation,
- eine Benutzerinformation,
- eine Zielinformation.

7. Verfahren nach einem der vorangehenden Ansprüche,
bei dem die zweite Verbindungsinformation eine Adresse ist.

8. Verfahren nach Anspruch 7,
bei dem die Adresse ein Multi-Protocol-Label-Switching-Adresse (MPLS-Label) ist.

9. Verfahren nach Anspruch 7 oder 8,
bei dem die Adresse mindestens eine der folgenden Informationen umfasst:
- eine Datennetzmanagementinformation,
- eine Sicherheitsinformation,
- eine Qualitätsinformation;
- eine Kosteninformation,
- eine Benutzeridentifikationsinformation,
- eine Zielinformation,
- eine Tunnelinformation,
- eine Datenübertragungsinformation.

10. Verfahren nach einem der vorangehenden Ansprüche,
bei dem die Verbindung mehrere Teilverbindungen umfasst, welche jeweils zwei Zwischenvermittlungseinheiten verbinden.

11. Verfahren nach einem der vorangehenden Ansprüche,
bei dem die Verbindung und/oder die Teilverbindung ein Tunnel ist.

12. Verfahren nach Anspruch 11,
bei dem der Tunnel ein Multi-Protocol-Label-Switching Label-Switched-Path Tunnel (MPLS LSP Tunnel) ist.

13. Verfahren nach einem der vorangehenden Ansprüche,
bei dem das Datennetz ein IP-Kommunikatiohsnetz ist.

14. Verfahren nach einem der vorangehenden Ansprüche,
bei dem das Datenpaket von einer Datenquelle an das Kommunikationsendgerät übertragen wird, wobei das Datenpaket von der Datenquelle an die erste Vermittlungseinheit, weiter über die Verbindung zu der zweiten Vermittlungseinheit und anschließend an das Kommunikationsendgerät übertragen wird.

15. Verfahren nach einem der vorangehenden Ansprüche,
- bei dem das Kommunikationsendgerät von dem Kommunikationsbereich der zweiten Vermittlungseinheit in einen Kommunikationsbereich einer dritten Vermittlungseinheit in dem Datennetz eintritt,
- bei dem durch diesen Eintritt in den Kommunikationsbereich der dritten Vermittlungseinheit eine Übertragung einer weiteren ersten Verbindungsinformation von der dritten Vermittlungseinheit an die erste Vermittlungseinheit veranlasst wird,
- bei dem unter Verwendung der weiteren ersten Verbindungsinformation eine Verbindung zwischen der ersten Vermittlungseinheit und der dritten Vermittlungseinheit eingerichtet wird,
- bei dem einem weiteren Datenpaket von der ersten Vermittlungseinheit eine weitere zweite Verbindungsinformation zugeordnet wird,
- bei dem das weitere Datenpaket unter Verwendung der weiteren zweiten Verbindungsinformation von der ersten vermittlungseinheit über die dritte Vermittlungseinheit an das Kommunikationsendgerät übertragen wird.

16. Verfahren nach einem der vorangehenden Ansprüche, mit mehreren solcher Eintritte des Kommunikationsendgerätes in jeweils einen Kommunikationsbereichs einer weiteren Vermittlungseinheit von mehreren weiteren Vermittlungseinheiten, wobei bei jedem Eintritt in einen der Kommunikationsbereiche eine Verbindung zwischen der ersten Vermittlungseinheit und der jeweiligen weiteren Vermittlungseinheit eingerichtet wird, über welche ein Datenpaket von der ersten Vermittlungseinheit zu dem Kommunikationsendgerät übertragen wird.

17. Anordnung zum Übertragen eines Datenpakets von einer ersten Vermittlungseinheit über eine zweite Vermittlungseinheit an ein Kominunikationsendgerät in einem Datennetz,
- die derart eingerichtet ist, dass durch einen Eintritt des Kommunikationsendgerätes in einen Kommunikationsbereich der zweiten Vermittlungseinheit eine Übertragung einer ersten Verbindungsinformation an die erste Vermittlungseinheit veranlasst wird,
- die derart eingerichtet ist, dass unter Verwendung der ersten Verbindungsinformation eine Verbindung zwischen der ersten Vermittlungseinheit und der zweiten Vermittlungseinheit eingerichtet wird,
- bei welcher Anordnung die erste Vermittlungseinheit derart eingerichtet ist, dass dem Datenpaket eine zweite Verbindungsinformation zugeordnet wird und das Datenpaket unter Verwendung der zweiten Verbindungsinformation von der ersten Vermittlungseinheit über die zweite Vermittlungseinheit an das Kommunikationsendgerät übertragen wird.

## Claims

1. Method for transmitting a data packet from a first network unit v ia a second network unit to a communication terminal in a data network,
- in which the communication terminal enters the communication range of a second network unit,
- in which this entry initiates transmission of a first connection information unit to the fi rst network unit,
- in which a connection is established between the first network unit and the second network unit using the first connection information unit,
- in which a second connection information unit is assigned to the data packet from the first netwo rk unit,
- in which the data packet is transmitted from the first network unit via the second network unit to the communication terminal using the second connection information unit.

2. Method according to Claim 1, in which on entry of the communication terminal into the communication range of the second network unit, the communication terminal is logged on to the second network unit.

3. Method according to Claim 1 or 2, in which the first connection information unit is transmitted from the second network uni t to the first network unit.

4. Method according to Claim 1 or 2, in which the first connection information unit is transmitted from the communication terminal or a third unit in the data network to the first network unit.

5. Method according to one of the preceding Claims, in which the communication terminal enters the communication range of the second network unit from a communication range of the first network unit.

6. Method according to one of the preceding Claims, in which the first connection information unit contains at least one of the following information units:
- a data network management information unit,
- a security information unit,
- a quality information unit,
- a cost information unit,
- a user information unit,
- a destination information unit.

7. Method according to one of the preceding Claims, in which the second connection information unit is an address.

8. Method according to Claim 7, in which the address is a Multi-Protocol-Label-Switching address (MPLS label).

9. Method according to Claim 7 o r 8, in which the address contains at least one of the following information units:
- a data network management information unit,
- a security information unit,
- a quality information unit,
- a cost information unit,
- a user identification information un it,
- a destination information unit
- a tunnel information unit
- a data transmission information unit.

10. Method according to one of the preceding Claims, in which the connection comprises a plurality of sub -connections, each of which connects two intermediate network units.

11. Method according to one of the preceding Claims, in which the connection and/or the sub-connection is a tunnel.

12. Method according to Claim 11, in which the tunnel is a Multi-Protocol-Label-Switching Label-Switched-Path tunnel (MPLS LSP tunnel).

13. Method according to one of the preceding Claims, in which the data network is an IP communication network.

14. Method according to one of the preceding Claims, in which the data packet is transmitted from a data source to the commu nication terminal, with the data packet being transmitted from the data source to the first network unit, on via the connection to the second network unit and then to the communication terminal.

15. Method according to one of the preceding Claims,
- in which the communication terminal enters a communication range of a third network unit in the data network from the communication range of the second network unit,
- in which this entry into the communication range of the third network unit initiates transmiss ion of a further first connection information unit from the third network unit to the first network unit,
- in which a connection is established between the first network unit and the third network unit using the further first connection information unit,
- in which a further second connection information unit is assigned to a further data packet from the first network unit,
- in which the further data packet is transmitted from the first network unit via the third network unit to the communication terminal using the further second connection information unit.

16. Method according to one of the preceding Claims, with a plurality of such entries of the communication terminal in each instance into a communication range of a further network unit from a plur ality of further network units, whereby on each entry into one of the communication ranges a connection is established between the first network unit and the respective further network unit, by means of which a data packet is transmitted from the first net work unit to the communication terminal.

17. Arrangement for transmitting a data packet from a first network unit via a second network unit to a communication terminal in a data network,
- which is established in such a way that entry of the communication terminal into a communication range of the second network unit initiates transmission of a first connection information unit to the first network unit,
- which is established in such a way that a connection is established between the first network unit and the second network unit using the first connection information unit,
- in which arrangement the first network unit is established in such a way that a second connection information unit is assigned to the data packet and the data packet is transmitted fro m the first network unit via the second network unit to the communication terminal using the second connection information unit.

## Revendications

1. Procédé permettant de transmettre un paquet de données d'une première unité de commutation à un terminal de communication par l'intermédiaire d'une seconde unité de commutation dans un réseau de données,
- dans lequel le terminal de communication entre dans une zone de communication de la seconde unité de commutation,
- dans lequel une transmission d'une première information de liaison à la première unité de commutation est causée en raison de cette entrée,
- dans lequel une liaison est établie entre la première unité de commutation et la seconde unité de commutation en utilisant la première information de liaison,
- dans lequel une seconde information de liaison est affectée au paquet de données par la première unité de commutation,
- dans lequel le paquet de données est transmis de la première unité de commutation au terminal de communication par l'intermédiaire de la seconde unité de commutation, en utilisant la seconde information de liaison.

2. Procédé selon la revendication 1,
dans lequel à l'entrée du terminal de communication dans la zone de communication de la seconde unité de commutation, le terminal de communication fait une demande auprès de la seconde unité de commutation.

3. Procédé selon la revendication 1 ou 2,
dans lequel la première information de liaison est transmise à la première unité de commutation depuis la seconde unité de commutation.

4. Procédé selon la revendication 1 ou 2,
dans lequel la première information de liaison est transmise depuis le terminal de communication ou depuis une troisième unité à la première unité de commutation dans le réseau de données.

5. Procédé selon l'une quelconque des revendications précédentes,
dans lequel le terminal de communication entre d'une zone de communication de la première unité de commutation dans la zone de communication de la seconde unité de commutation.

6. Procédé selon l'une quelconque des revendications précédentes,
dans lequel la première information de liaison comprend au moins l'une des informations suivantes :
- une information de gestion du réseau de données,
- une information de sécurité,
- une information de qualité,
- une information de coûts,
- une information utilisateur,
- une information cible.

7. Procédé selon l'une quelconque des revendications précédentes,
dans lequel la seconde information de liaison est une adresse.

8. Procédé selon la revendication 7,
dans lequel l'adresse est une adresse Multi-Protocol-Label-Switching (étiquette MPLS).

9. Procédé selon la revendication 7 ou 8,
dans lequel l'adresse comprend au moins l'une des informations suivantes :
- une information de gestion du réseau de données,
- une information de sécurité,
- une information de qualité,
- une information de coûts,
- une information d'identification d'utilisateur,
- une information cible,
- une information de tunnel,
- une information de transmission de données.

10. Procédé selon l'une quelconque des revendications précédentes,
dans lequel la liaison comprend plusieurs liaisons partielles, lesquelles connectent respectivement deux unités de commutation intermédiaires.

11. Procédé selon l'une quelconque des revendications précédentes,
dans lequel la liaison et/ou la liaison partielle est un tunnel.

12. Procédé selon la revendication 11,
dans lequel le tunnel est un tunnel Multi-Protocol-Label-Switching Label-Switched-Path (tunnel MPLS LSP).

13. Procédé selon l'une quelconque des revendications précédentes,
dans lequel le réseau de données est un réseau de communication IP.

14. Procédé selon l'une quelconque des revendications précédentes,
dans lequel le paquet de données est transmis au terminal de communication depuis une source de données, le paquet de données étant transmis de la source de données à la première unité de commutation, ensuite à la seconde unité de commutation par l'intermédiaire de la liaison et, finalement, au terminal de communication.

15. Procédé selon l'une quelconque des revendications précédentes,
- dans lequel le terminal de communication entre de la zone de communication de la seconde unité de commutation dans une zone de communication d'une troisième unité de commutation dans le réseau de données,
- dans lequel une transmission d'une autre première information de liaison est causée depuis la troisième unité de commutation à la première unité de commutation en raison de cette entrée dans la zone de communication de la troisième unité de commutation,
- dans lequel une liaison est établie entre la première unité de commutation et la troisième unité de commutation en utilisant l'autre première information de liaison,
- dans lequel une autre seconde information de liaison est affectée à un autre paquet de données par la première unité de commutation,
- dans lequel l'autre paquet de données est transmis de la première unité de commutation au terminal de communication par l'intermédiaire de la troisième unité de commutation, en utilisant l'autre seconde information de liaison.

16. Procédé selon l'une quelconque des revendications précédentes, comprenant plusieurs de ces telles entrées du terminal de communication dans respectivement une zone de communication d'une autre unité de commutation de plusieurs autres unités de commutation, une connexion étant établie entre la première unité de commutation et l'autre unité de commutation respective à chaque entrée dans l'une des zones de communication, au moyen de laquelle un paquet de données est transmis de la première unité de commutation au terminal de communication.

17. Dispositif permettant de transmettre un paquet de données d'une première unité de commutation à un terminal de communication par l'intermédiaire d'une seconde unité de commutation dans un réseau de données,
- qui est exécuté de telle manière qu'en raison d'une entrée du terminal de communication dans une zone de communication de la seconde unité de commutation, une transmission d'une première information de liaison à la première unité de commutation est causée,
- qui est exécuté de telle manière qu'en utilisant la première information de liaison, une liaison est établie entre la première unité de commutation et la deuxième unité de commutation,
- dans lequel dispositif, la première unité de commutation est exécutée de telle manière qu'une seconde information de liaison est affectée au paquet de données et que le paquet de données est transmis de la première unité de commutation au terminal de communication par l'intermédiaire de la seconde unité de commutation en utilisant la seconde information de liaison.
